# EUROPÄISCHE PATENTSCHRIFT

(11) **EP 4 216 788 B1**
(45) Veröffentlichungstag und Bekanntmachung des Hinweises auf die Patenterteilung: **19.08.2026**
(21) Anmeldenummer: 21777691.3
(22) Anmeldetag: 14.09.2021
(51) Int. Cl.: A47L 15/00, A47L 15/42, D06F 33/32, D06F 34/22, G01N 31/22, G01N 33/18, D06F 39/00, D06F 103/00, D06F 103/20, D06F 103/22, D06F 103/64, D06F 105/42, D06F 105/52, G01N 21/31

(54) **WASSERFÜHRENDES HAUSHALTSGERÄT UND VERFAHREN**
WATER-USING HOUSEHOLD APPLIANCE AND METHOD
APPAREIL MÉNAGER UTILISANT DE L'EAU ET PROCÉDÉ

(30) Priorität: 28.09.2020 DE 102020212182
(43) Veröffentlichungstag der Anmeldung: 02.08.2023
(73) Patentinhaber: BSH Hausgeräte GmbH, 81739 München (DE)
(72) Erfinder: RITTNER, Martin, 86465 Welden (DE); MILLER, Daniel, 89435 Finningen (DE); SAGAR, Kaushal, Singapore 573943 (SG)
(86) Internationale Anmeldenummer: PCT/EP2021/075190
(87) Internationale Veröffentlichungsnummer: WO 2022/063635

(56) Entgegenhaltungen:
- CN-A- 111 685 679
- DE-A1- 10 146 767

## Beschreibung

Die vorliegende Erfindung betrifft ein wasserführendes Haushaltsgerät und ein Verfahren zum Betreiben eines wasserführenden Haushaltsgeräts.

Einem wasserführenden Haushaltsgerät zugeführtes Leitungswasser weist unterschiedliche Inhaltsstoffe auf, die ein Behandlungsergebnis eines mit dem Haushaltsgerät durchgeführten Behandlungsprogramms beeinflussen können. Daher ist es vorteilhaft, wenn die Inhaltsstoffe des Wassers bekannt sind, um beispielsweise die Behandlungsprogramme entsprechend anzupassen. Einige Inhaltsstoffe des Leitungswassers hängen insbesondere von der Geologie der Region ab, in der das Wasser bereitgestellt wird, und sind für eine jeweilige Region im Wesentlichen zeitlich konstant. Ein Beispiel hierfür ist die Wasserhärte. Bekannte Haushaltsgeräte weisen eine Enthärtungseinrichtung auf, die auf einen bestimmten Härtegrad einzustellen ist. Diese Einstellung wird beispielsweise von einem Benutzer einmalig bei der Inbetriebnahme des Haushaltsgeräts vorgenommen. Dies ist für den Benutzer lästig und kann zudem, bei einer fehlerhaft vorgenommenen Einstellung, zu einer Beeinträchtigung von Behandlungsergebnissen und damit auch zu einer Unzufriedenheit des Benutzers führen.

US 8,147,758 B2 offenbart eine optische Messeinrichtung, die zum Ermitteln der Wasserhärte in wasserführenden Geräten verwendet werden kann. Die Messeinrichtung ist allerdings komplex aufgebaut und erfordert einen hohen Implementierungsaufwand.

Die DE 101 46 767 A1 zeigt ein Sensorelement mit einem Sensor zur Überwachung und Regelung von Wasserenthärtungsanlagen, insbesondere in Geschirrspülmaschinen und Waschmaschinen, der auf einer einfachen und störsicheren Auswertung der Volumenänderung eines Inonenaustauschers beruht.

Die CN 111685679 A offenbart eine weitere Einrichtung zur Überwachung einer Geschirrspülmaschine.

Vor diesem Hintergrund besteht eine Aufgabe der vorliegenden Erfindung darin, ein verbessertes wasserführendes Haushaltsgerät bereitzustellen.

Gemäß einem ersten Aspekt wird ein wasserführendes Haushaltsgerät, insbesondere eine Geschirrspülmaschine, mit einer Steuerungsvorrichtung zum Durchführen eines Behandlungsprogramms aus einer Anzahl von Behandlungsprogrammen zum Behandeln von in einem Behandlungsraum des Haushaltsgeräts anordenbarem Behandlungsgut mit einer Spülflotte vorgeschlagen. Eine Sensoreinrichtung ist zum Erfassen eines Parameterwerts wenigstens eines Parameters der Spülflotte während der Durchführung des Behandlungsprogramms eingerichtet, wobei die Sensoreinrichtung eine Messstrecke aufweist, die zumindest abschnittsweise durch die Spülflotte verläuft. Die Sensoreinrichtung weist eine durch eine physikalische und/oder chemische Einwirkung ab- und/oder auflösbare Schicht auf, die während der Durchführung des Behandlungsprogramms einen Kontakt mit der Spülflotte aufweist und die eine in Abhängigkeit eines Inhaltsstoffs der Spülflotte veränderliche Eigenschaft aufweist. Die Sensoreinrichtung ist zum Erfassen der Eigenschaft der Schicht eingerichtet und die Steuerungsvorrichtung ist zum Ermitteln eines Messwerts des Inhaltsstoffs der Spülflotte in Abhängigkeit der erfassten Eigenschaft eingerichtet.

Dieses Haushaltsgerät weist den Vorteil auf, dass mit der Sensoreinrichtung zunächst eine erste Messgröße erfasst werden kann und anschließend eine zweite Messgröße erfasst werden kann. Insbesondere wenn die erste Messgröße nur einmalig, beispielsweise bei einer ersten Inbetriebnahme des Haushaltsgeräts, bestimmt werden muss, da diese beispielsweise zeitlich im Wesentlichen konstant ist, ist das vorgeschlagene Haushaltsgerät vorteilhaft. Unter "im Wesentlichen konstant" wird insbesondere verstanden, dass die Messgröße im Verlauf der Nutzungsdauer des Haushaltsgeräts, beispielsweise einige Jahre, sich höchstens um einen nicht signifikanten Wert verändert. Nicht signifikant ist eine Veränderung beispielsweise dann, wenn die auf Basis der Messgröße vorzugsweise gewählten Betriebseinstellungen auch unter Zugrundelegung des veränderten Werts objektiv geeignete Betriebseinstellungen sind.

Das Haushaltsgerät ist beispielsweise als eine Geschirrspülmaschine oder eine Waschmaschine ausgebildet. Das Behandlungsgut ist dementsprechend beispielsweise Spülgut, wie Geschirr, oder Kleidung. Das Haushaltsgerät ist insbesondere zum Reinigen des Behandlungsguts mittels einer Spülflotte eingerichtet. Unter Spülflotte wird vorliegend jede dem Haushaltsgerät zugeführte Flüssigkeit, die beispielsweise von einer Pumpeinrichtung umgewälzt wird, verstanden. Damit umfasst die Spülflotte insbesondere unbehandeltes, direkt aus einer Wasserleitung zugeführtes Wasser. Zur Verbesserung der Reinigungswirkung kann die Spülflotte vorzugsweise auf eine bestimmte Temperatur aufgeheizt werden und es können unterschiedliche Reinigungsmittel, wie Waschpulver, Spülmittel, Klarspüler, Enzyme und andere physikalisch-chemisch aktive Substanzen der Spülflotte zugesetzt werden.

Die Steuerungsvorrichtung kann hardwaretechnisch und/oder softwaretechnisch implementiert sein. Bei einer hardwaretechnischen Implementierung kann die Steuerungsvorrichtung zum Beispiel als Computer oder als Mikroprozessor ausgebildet sein. Bei einer softwaretechnischen Implementierung kann die Steuerungsvorrichtung als Computerprogrammprodukt, als eine Funktion, als eine Routine, als Teil eines Programmcodes oder als ausführbares Objekt ausgebildet sein. Die Steuerungsvorrichtung umfasst beispielsweise eine Speichereinheit, in welcher die Anzahl von Behandlungsprogrammen gespeichert sind. Ein Behandlungsprogramm umfasst beispielsweise mehrere Teilprogrammschritt, wie ein Vorspülen, Hauptspülen, Klarspülen und Trocknen. Die verschiedenen Teilprogrammschritte unterscheiden sich beispielsweise in ihrer Dauer und ihren Einstellungen, wie einer Spülflottentemperatur, Zugabe von Reinigungsmittel und weitere die Behandlung des Behandlungsguts beeinflussende Größen. Insbesondere weist die Spülflotte in unterschiedlichen Teilprogrammschritten eine unterschiedliche Zusammensetzung auf.

Vorteilhaft kann mittels der Sensoreinrichtung ein Parameterwert eines Parameters der Spülflotte erfasst werden. Auf Basis des erfassten Parameterwerts kann das Behandlungsprogramm gesteuert und/oder angepasst werden, um ein verbessertes Behandlungsergebnis zu erreichen.

Die Sensoreinrichtung ist beispielsweise in dem Behandlungsraum des Haushaltsgeräts angeordnet. Die Sensoreinrichtung kann auch in oder an einem die Spülflotte führenden Elemente, wie einer Hydraulikeinrichtung oder dergleichen, angeordnet sein. Damit kann eine Messstrecke der Sensoreinrichtung zumindest abschnittsweise durch die Spülflotte in dem Haushaltsgerät verlaufen. Die Sensoreinrichtung ist insbesondere nicht außerhalb des Haushaltsgeräts angeordnet.

Die Sensoreinrichtung weist zunächst, das heißt im Auslieferungszustand, eine Schicht auf. Die Schicht ist derart auf oder an der Sensoreinrichtung angeordnet, dass die Schicht beim Betrieb des Haushaltsgeräts mit der Spülflotte in Kontakt kommt. Die Schicht weist eine Eigenschaft auf, die sich in Abhängigkeit eines Inhaltsstoffs der Spülflotte verändert. Der Inhaltsstoff ist insbesondere ein zeitlich im Wesentlichen konstanter Inhaltsstoff der Spülflotte, das heißt, dass sich beispielsweise die Konzentration des Inhaltsstoffs in der Spülflotte nicht oder nur sehr langsam, beispielsweise über Jahre hinweg, verändert. Inhaltsstoffe dieser Art hängen beispielsweise von der Geologie einer Region ab, wie einem Kalkgehalt und dergleichen.

Wenn die Schicht mit der Spülflotte in Kontakt kommt, dann stellt sich die veränderliche Eigenschaft in Abhängigkeit des Inhaltsstoffs, insbesondere in Abhängigkeit einer Konzentration des Inhaltsstoffs, ein. Die Eigenschaft der Schicht, die sich verändert, ist beispielsweise eine optische Eigenschaft, wie eine Farbe, ein Brechungsindex, eine Absorption und/oder eine Fluoreszenz, und/oder eine geometrische Eigenschaft, wie eine Schichtdicke, und/oder eine elektrische Eigenschaft, wie eine Leitfähigkeit. Die Schicht kann auch durch Änderung mehrerer dieser Eigenschaften reagieren, so kann beispielsweise ein Brechungsindex mit zunehmender Schichtdicke, die durch ein Aufquellen der Schicht in der Spülflotte verursacht wird, abnehmen und eine Leitfähigkeit zunehmen.

Die veränderliche Eigenschaft kann mit der Sensoreinrichtung erfasst werden, und die Steuervorrichtung kann auf Basis der erfassten Eigenschaft einen Messwert des Inhaltsstoffs bestimmen, also beispielsweise die Konzentration des Inhaltsstoffs in der Spülflotte. Dies wird vorzugsweise vorgenommen, wenn die Spülflotte unbehandelt ist, so dass sichergestellt ist, dass der Messwert nicht durch eine Behandlung der Spülflotte, wie einer Zugabe eines Reinigungsmittels, verändert oder verfälscht ist.

Die Schicht ist durch eine physikalisch-chemische Einwirkung ablösbar oder auflösbar. Die physikalisch-chemische Einwirkung erfolgt beispielsweise mittels der Spülflotte. Insbesondere kann eine Erhöhung der Spülflottentemperatur und/oder die Zugabe eines Reinigungsmittels zu einem Ablösen oder Zersetzen der Schicht führen. Das Ablösen oder Auflösen der Schicht bedarf hierbei insbesondere keiner für ein Haushaltsgerät unüblichen Chemikalien. Das heißt, dass sich die Schicht beispielsweise durch die Einwirkung der Spülflotte während eines regulären Behandlungsprogramms ablöst oder auflöst.

Die Schicht kann beispielsweise ein Hydrogel umfassen. Ein Hydrogel ist beispielsweise ein polymeres Netzwerk, das in einer wässrigen Lösung aufquillt, indem Wasser in das polymere Netzwerk eindringt und dort zumindest schwach gebunden wird. Das polymere Netzwerk kann eine Vielzahl funktioneller Gruppen umfassen, die beispielsweise als Seitengruppen an das polymere Netzwerk gebunden sind. Unter einer funktionellen Gruppe wird insbesondere eine chemische Verbindung verstanden, die bestimmte physikalisch-chemische Eigenschaften aufweist, die von äußeren Einflussfaktoren abhängen können. Ein Beispiel hierfür sind Säure/Base-Paare, deren Dissoziationszustand von dem pH-Wert der wässrigen Lösung abhängt, wie Carboxylate.

Vorliegend ist das Hydrogel vorzugsweise an eine Oberfläche der Sensoreinrichtung in der Art einer Beschichtung angebunden. Die Anbindung kann direkt oder auch unter Verwendung eines Haftvermittlers und/oder einer Opferschicht erfolgen. Beispielsweise kann der Haftvermittler oder die Opferschicht derart ausgebildet sein, dass diese bei einer Erreichen oder Überschreiten einer bestimmten Temperatur einen Phasenübergang durchführt, der zum Ablösen der Schicht führt (sogenannte UCST-Systeme, "upper critical solution temperature").

Solange die Schicht vorhanden ist, kann mittels der Sensoreinrichtung insbesondere ausschließlich die Eigenschaft der Schicht erfasst und damit der Messwert des Inhaltsstoffs ermittelt werden. Das heißt, dass der Parameterwert des Parameters der Spülflotte, für dessen Erfassung die Sensoreinrichtung eingerichtet ist, nicht erfasst werden kann, solange die Schicht vorhanden ist. Erst nachdem die Schicht abgelöst oder aufgelöst wurde, kann mittels der Sensoreinrichtung der Parameterwert des Parameters der Spülflotte erfasst werden. Man kann auch sagen, dass die Sensoreinrichtung zwei Zustände aufweist, wobei sie in einem jeweiligen Zustand zum Erfassen unterschiedlicher Messgrößen eingerichtet ist. Ein erster Zustand umfasst die Schicht und ein zweiter Zustand umfasst keine Schicht. Insbesondere der erste Zustand liegt nur bei erstmaliger Inbetriebnahme des Haushaltsgeräts vor, nach dem Ablösen oder Auflösen der Schicht liegt irreversibel der zweite Zustand vor.

Daher wird insbesondere bei der ersten Inbetriebnahme des Haushaltsgeräts zunächst der Inhaltsstoff der Spülflotte ermittelt, dann die Schicht durch die physikalisch-chemische Einwirkung ab- und/oder aufgelöst, und anschließend in folgenden Behandlungsprogrammen die Sensoreinrichtung zum Erfassen des Parameterwerts des Parameters der Spülflotte verwendet.

Gemäß einer Ausführungsform des wasserführenden Haushaltsgeräts ist die Steuerungsvorrichtung dazu eingerichtet, das Behandlungsprogramm in Abhängigkeit des ermittelten Inhaltsstoffs durchzuführen.

Gemäß einer weiteren Ausführungsform des wasserführenden Haushaltsgeräts umfasst die Sensoreinrichtung eine optische Messeinrichtung aufweisend eine Strahlungsquelle und einen Strahlungsdetektor, wobei die Strahlung im Betrieb durch die Schicht verläuft und die Schicht eine veränderliche optische Eigenschaft aufweist.

Die optische Messeinrichtung basiert insbesondere auf Strahlung aus einem Wellenlängenbereich zwischen 150 nm - 2500 nm. Die Strahlungsquelle und der Strahlungsdetektor sind bevorzugt in Form eines mikroelektronischen Halbleiterelements ausgebildet, wie eine Leuchtdiode (LED) und eine Photodiode. In Abhängigkeit des zu erfassenden Parameterwerts kann die optische Messeinrichtung zum Erfassen eines kontinuierlichen Spektrums, zum Erfassen einzelner, diskreter Wellenlängen, zum Erfassen eines integrierten Intensitätssignals, oder auch zum Erfassen von nur einer Wellenlänge eingerichtet sein.

Indem die Strahlung durch die Schicht verläuft, wird die Strahlung durch die Schicht moduliert, insbesondere in Abhängigkeit der optischen Eigenschaft der Schicht, die sich in Abhängigkeit des Inhaltsstoffs der Spülflotte einstellt. Daher kann von dem durch den Strahlungsdetektor erfassten optischen Signal der Messwert des Inhaltsstoffs ermittelt werden.

Die optische Sensoreinrichtung ist beispielsweise als ein Trübungssensor ausgebildet, der zum Erfassen einer Trübung als den Parameter der Spülflotte eingerichtet ist.

Gemäß einer weiteren Ausführungsform des wasserführenden Haushaltsgeräts weist die Schicht eine in Abhängigkeit einer Konzentration des Inhaltsstoffs der Spülflotte veränderliche Fluoreszenz auf.

In diesem Ausführungsbeispiel weist die Schicht somit funktionelle Gruppen auf, die bei Einstrahlung von Licht mit einer bestimmten Mindestenergie (Anregungsenergie) zu Fluoreszenz angeregt werden. Die funktionelle Gruppe absorbiert dabei ein Photon des eingestrahlten Lichts und strahlt stattdessen ein Photon Fluoreszenzlicht ab.

Das heißt, dass die Schicht beispielsweise mit steigender Konzentration des Inhaltsstoffs eine stärkere oder auch schwächere Fluoreszenz zeigt. Die Fluoreszenz wird insbesondere durch die eingestrahlte Strahlung angeregt. Die Fluoreszenz hängt beispielsweise von einem Abstand zwischen zwei in der Schicht vorhandenen funktionellen Gruppen ab, wobei deren Abstand sich mit zunehmender Quellung der Schicht vergrößert.

Gemäß einer weiteren Ausführungsform des wasserführenden Haushaltsgeräts ist zwischen der Schicht und dem Strahlungsdetektor ein optisches Filterelement angeordnet, das nur für das von der Schicht abgestrahlte Fluoreszenzlicht durchlässig ist, wobei das optische Filterelement durch eine physikalische und/oder chemische Einwirkung auflösbar ist.

Diese Ausführungsform ist vorteilhaft, um ein Signal-Rausch-Verhältnis zu verbessern. Dies ist insbesondere vorteilhaft, wenn der Strahlungsdetektor keine spektrale Information der Strahlung erfassen kann. Das optische Filterelement kann beispielsweise als Hochpass (auch Kurzpassfilter), Tiefpass (auch Langpassfilter) oder auch als Bandpass ausgebildet sein. Das optische Filterelement umfasst beispielsweise Farbstoffe, die Licht bestimmter Wellenlängen absorbieren. Das optische Filterelement kann, wie auch die Schicht, als ein Hydrogel ausgebildet sein.

In Ausführungsformen kann zudem zwischen der Strahlungsquelle und der Schicht ein weiteres optisches Filterelement vorgesehen sein, das nur für Licht durchlässig ist, das eine andere Wellenlänge als das Fluoreszenzlicht aufweist und das geeignet ist, die Fluoreszenz anzuregen. Hiermit kann das Signal-Rausch-Verhältnis noch weiter verbessert werden.

Gemäß einer weiteren Ausführungsform des wasserführenden Haushaltsgeräts umfasst die Sensoreinrichtung eine elektrische Messeinrichtung aufweisend wenigstens zwei Elektroden, wobei ein durch eine an die Elektroden angelegte Spannung erzeugtes elektrisches Feld zumindest teilweise durch die Schicht verläuft.

Die elektrische Messeinrichtung ist beispielsweise ein Impedanzsensor, der zum Erfassen eines Leitwerts als den Parameter der Spülflotte eingerichtet ist. Von dem Leitwert kann zum Beispiel auf eine Reinigerkonzentration geschlossen werden.

Gemäß einer weiteren Ausführungsform des wasserführenden Haushaltsgeräts umfasst die Sensoreinrichtung einen elektrostriktiven und/oder magnetostriktiven Wandler, der zum Erzeugen einer mechanischen Schwingung eingerichtet ist, wobei die erzeugte mechanische Schwingung in die Schicht einkoppelt.

Der Wandler kann zum Erzeugen von Ultraschall eingerichtet sein. Der Wandler kann zum Erfassen einer Viskosität der Schicht und/oder der Spülflotte eingerichtet sein.

In dieser Ausführungsform ist die Schicht vorzugsweise direkt auf einer Oberfläche des Wandlers angeordnet. Der Wandler umfasst beispielsweise einen piezoelektrischen Kristall. Eine Resonanzfrequenz des Kristalls hängt insbesondere von einer Dicke des Kristalls sowie darauf haftenden Molekülen ab. Eine Beschichtung des Wandlers führt damit zu einer Veränderung der Resonanzfrequenz, und eine Veränderung der Zusammensetzung der Schicht, beispielsweise durch Quellen, verschiebt die Resonanzfrequenz weiter.

Der Inhaltsstoff der Spülflotte umfasst eine Ionenkonzentration, insbesondere von Calciumionen und/oder Magnesiumionen, wobei die Spülflotte bei dem Erfassen der veränderlichen Eigenschaft der Schicht dem Haushaltsgerät zugeführtes Leitungswasser ist.

Somit ist sichergestellt, dass der Inhaltsstoff, der auf Basis der veränderlichen Eigenschaft bestimmt wird, ein zeitlich im Wesentlichen konstanter Inhaltsstoff des Leitungswassers ist.

Die Steuerungsvorrichtung ist dazu eingerichtet, eine Wasserhärte von dem Haushaltsgerät als Spülflotte zugeführtem Leitungswasser zu ermitteln und eine dem Haushaltsgerät zugeordnete Enthärtungseinrichtung einzustellen.

Eine Enthärtungseinrichtung kann beispielsweise ein Enthärtungsmittel, wie ein Salz, umfassen, und ist dazu eingerichtet, Wasser mit einer bestimmten Härte bereitzustellen. Die Härte des bereitgestellten Wassers hängt dabei von der Eingangshärte und der Menge an Salz, die pro Volumeneinheit eingesetzt wird, ab. Je nach Behandlungsgut kann eine optimale Wasserhärte unterschiedlich sein, insbesondere bei Glaswaren sollte das Wasser nicht zu weich sein, da dies zu einer schnellen Glaskorrosion führen kann. Die Steuerungsvorrichtung kann dementsprechend ferner dazu eingerichtet sein, die Enthärtungseinrichtung in Abhängigkeit eines gewählten Behandlungsprogramms aus der Anzahl von Behandlungsprogrammen einzustellen.

Gemäß einer weiteren Ausführungsform des wasserführenden Haushaltsgeräts umfasst der Parameter der Spülflotte eine Trübung der Spülflotte, eine Reinigerkonzentration der Spülflotte und/oder eine Schmutzfracht der Spülflotte, wobei die Steuerungsvorrichtung zum Durchführen des Behandlungsprogramms in Abhängigkeit des erfassten Parameterwerts eingerichtet ist.

Mit dieser Ausführungsform kann ein Behandlungsergebnis optimiert werden.

Gemäß einer weiteren Ausführungsform des wasserführenden Haushaltsgeräts ist die Steuerungsvorrichtung dazu eingerichtet, ein Behandlungsprogramm derart durchzuführen, dass die Schicht abgelöst und/oder aufgelöst wird.

Welche Maßnahme hierzu geeignet ist, hängt von dem Aufbau der Schicht ab. Beispiele sind ein Erhöhen der Spülflottentemperatur, ein Zugeben eines Reinigungsmittels, oder auch ein Einstrahlen von Licht.

Die Spülflottentemperatur kann, wie vorstehend bereits erläutert, in einem geeigneten Material einen Phasenübergang hervorrufen, der zum Auf- oder Ablösen der Schicht führt.

Ein Reinigungsmittel kann Moleküle oder Enzyme enthalten, die mit Molekülen in der Schicht reagieren und diese damit zersetzen.

Das Einstrahlen von Licht kann Bindungen in der Schicht aufbrechen, so dass die Schicht altert und sich zersetzt.

Die vorstehend genannten Maßnahmen bedürfen beispielsweise einer gewissen Einwirkungszeit, die im Bereich von Minuten oder auch Stunden liegen kann. Da die Schicht jedoch nur einmal abgelöst oder aufgelöst werden muss, kann ein einmalig erhöhter Aufwand hierfür gerechtfertigt sein.

Gemäß einer weiteren Ausführungsform des wasserführenden Haushaltsgeräts ist die Steuerungsvorrichtung zum Erfassen eines ersten Kalibrierungsmesswerts der Sensoreinrichtung vor der ersten Durchführung eines Behandlungsprogramms und/oder zum Erfassen eines zweiten Kalibrierungsmesswerts der Sensoreinrichtung nach dem Erfassen der Eigenschaft der Schicht eingerichtet, und ist zum Ermitteln des Messwerts des Inhaltsstoffs der Spülflotte in Abhängigkeit des ersten Kalibrierungsmesswerts und/oder des zweiten Kalibrierungsmesswerts eingerichtet.

Die erste Durchführung eines Behandlungsprogramms bezieht sich dabei auf das erste Behandlungsprogramm bei einer ersten Inbetriebnahme des Haushaltsgeräts.

Mit dieser Ausführungsform lässt sich vorteilhaft eine Serienstreuung der Komponenten der Sensoreinrichtung, wie beispielsweise eine abgestrahlte Intensität einer Strahlungsquelle und/oder eine Sensitivität eines Strahlungsdetektors kompensieren. Damit ist das Ermitteln des Messwerts des Inhaltsstoffs der Spülflotte weniger fehleranfällig. Die Kalibrierungsmesswerte können auch beim Ermitteln des Parameterwerts des Parameters der Spülflotte verwendet werden.

Vorteilhaft wird ein Kalibrierungsmesswert im trockenen Zustand der Sensoreinrichtung, also ohne Spülflotte, mit der Schicht und ein Kalibrierungsmesswert im trockenen Zustand ohne die Schicht, das heißt nach dem Ab- oder Auflösen der Schicht, erfasst.

Gemäß einem weiteren Aspekt wird ein Verfahren zum Betreiben eines wasserführenden Haushaltsgeräts, insbesondere einer Geschirrspülmaschine, vorgeschlagen. In einem ersten Schritt wird eine Eigenschaft einer Schicht einer Sensoreinrichtung erfasst. Die Schicht ist mit einer Spülflotte des Haushaltsgeräts in Kontakt. In einem zweiten Schritt wird ein Inhaltsstoff der Spülflotte in Abhängigkeit der erfassten Eigenschaft ermittelt. In einem dritten Schritt wird die Schicht aufgelöst. In einem vierten Schritt wird ein Parameterwert eines Parameters der Spülflotte mittels der Sensoreinrichtung erfasst.

Die für das vorgeschlagene Haushaltsgerät beschriebenen Ausführungsformen und Merkmale gelten für das vorgeschlagene Verfahren entsprechend.

Das vorgeschlagene Verfahren wird vorzugsweise mit einem wasserführenden Haushaltsgerät gemäß dem ersten Aspekt durchgeführt.

Das Verfahren kann weitere Schritte umfassen. Insbesondere kann das Verfahren ein Durchführen eines Behandlungsprogramms in Abhängigkeit des ermittelten Inhaltsstoffs und/oder des ermittelten Parameterwerts umfassen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt eine schematische perspektivische Ansicht einer Ausführungsform eines wasserführenden Haushaltsgeräts;
Fig. 2 zeigt zwei schematische Abbildungen eines ersten Ausführungsbeispiels einer Sensoreinrichtung;
Fig. 3 zeigt zwei schematische Abbildungen eines zweiten Ausführungsbeispiels einer Sensoreinrichtung;
Fig. 4 zeigt zwei schematische Abbildungen dritten Ausführungsbeispiels einer Sensoreinrichtung;
Fig. 5 zeigt eine schematische Abbildung eines weiteren Ausführungsbeispiels einer Sensoreinrichtung;
Fig. 6 zeigt ein beispielhaftes Diagramm einer Fluoreszenz; und
Fig. 7 zeigt ein schematisches Blockschaltbild eines beispielhaften Verfahrens zum Betreiben eines wasserführenden Haushaltsgeräts.

In den Figuren sind gleiche oder funktionsgleiche Elemente mit denselben Bezugszeichen versehen worden, sofern nichts anderes angegeben ist.

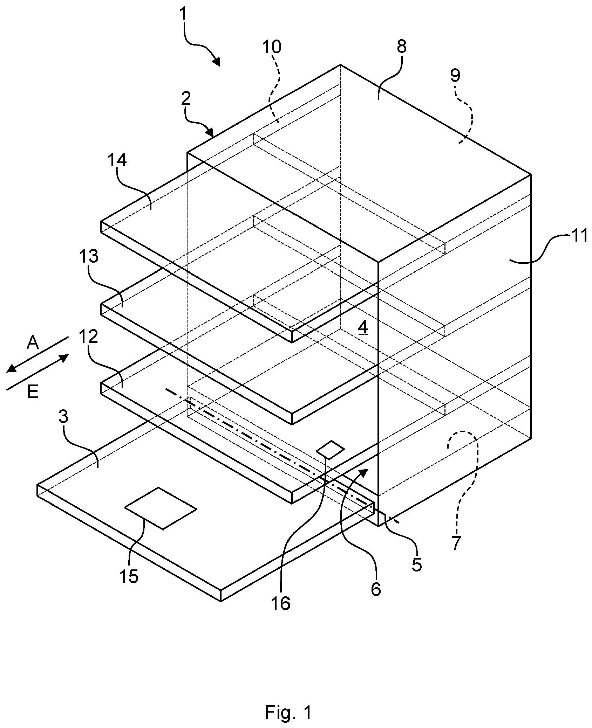

Die Fig. 1 zeigt eine schematische perspektivische Ansicht einer Ausführungsform eines als Haushalts-Geschirrspülmaschine ausgebildeten wasserführenden Haushaltsgeräts 1. Die Haushalts-Geschirrspülmaschine 1 umfasst einen Spülbehälter 2, der durch eine Tür 3, insbesondere wasserdicht, verschließbar ist. Hierzu kann zwischen der Tür 3 und dem Spülbehälter 2 eine Dichteinrichtung vorgesehen sein. Der Spülbehälter 2 ist vorzugsweise quaderförmig. Der Spülbehälter 2 kann in einem Gehäuse der Haushalts-Geschirrspülmaschine 1 angeordnet sein. Der Spülbehälter 2 und die Tür 3 können einen Behandlungsraum 4 zum Spülen von Spülgut bilden.

Die Tür 3 ist in der Fig. 1 in ihrer geöffneten Stellung dargestellt. Durch ein Schwenken um eine an einem unteren Ende der Tür 3 vorgesehene Schwenkachse 5 kann die Tür 3 geschlossen oder geöffnet werden. Mit Hilfe der Tür 3 kann eine Beschickungsöffnung 6 des Spülbehälters 2 geschlossen oder geöffnet werden. Der Spülbehälter 2 weist einen Boden 7, eine dem Boden 7 gegenüberliegend angeordnete Decke 8, eine der geschlossenen Tür 3 gegenüberliegend angeordnete Rückwand 9 und zwei einander gegenüberliegend angeordnete Seitenwände 10, 11 auf. Der Boden 7, die Decke 8, die Rückwand 9 und die Seitenwände 10, 11 können beispielsweise aus einem Edelstahlblech gefertigt sein. Alternativ kann beispielsweise der Boden 7 aus einem Kunststoffmaterial gefertigt sein.

Die Haushalts-Geschirrspülmaschine 1 weist ferner zumindest eine Spülgutaufnahme 12 bis 14 auf. Vorzugsweise können mehrere, beispielsweise drei, Spülgutaufnahmen 12 bis 14 vorgesehen sein, wobei die Spülgutaufnahme 12 eine untere Spülgutaufnahme oder ein Unterkorb, die Spülgutaufnahme 13 eine obere Spülgutaufnahme oder ein Oberkorb und die Spülgutaufnahme 14 eine Besteckschublade sein kann. Wie die Fig. 1 weiterhin zeigt, sind die Spülgutaufnahmen 12 bis 14 übereinander in dem Spülbehälter 2 angeordnet. Jede Spülgutaufnahme 12 bis 14 ist wahlweise in den Spülbehälter 2 hinein- oder aus diesem herausverlagerbar. Insbesondere ist jede Spülgutaufnahme 12 bis 14 in einer Einschubrichtung E in den Spülbehälter 2 hineinschiebbar oder hineinfahrbar und entgegen der Einschubrichtung E in einer Auszugsrichtung A aus dem Spülbehälter 2 herausziehbar oder herausfahrbar.

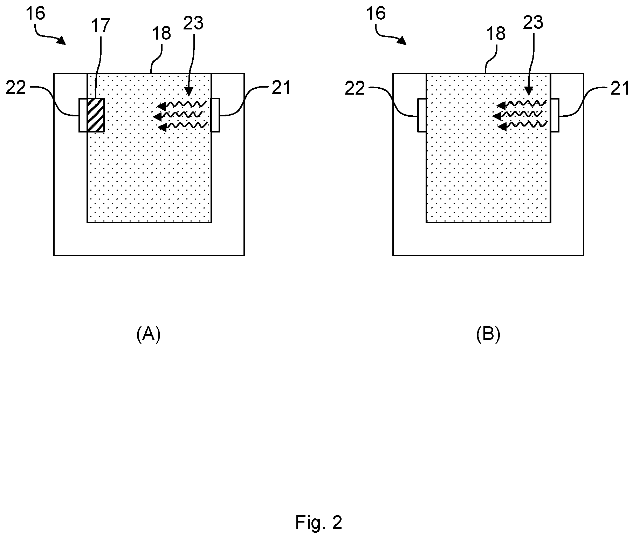

An der Tür 3 der Haushalts-Geschirrspülmaschine 1 ist eine Steuerungsvorrichtung 15 angeordnet. Die Steuerungsvorrichtung 15 ist beispielsweise als ein integrierter Schaltkreis ausgebildet und ist zum Durchführen eines Behandlungsprogramms aus einer Anzahl von Behandlungsprogrammen eingerichtet. Das heißt, dass die Steuerungsvorrichtung 15 zum Steuern, Regeln und/oder Betreiben weiterer Komponente der Haushalts-Geschirrspülmaschine 1, wie beispielsweise eines Ventils zum Zuführen von Leitungswasser als Spülflotte 18 (siehe Fig. 2 - 5), eine Pumpeinrichtung, einer Wasserweiche, einer Heizung, eine automatischen Dosiereinheit, und dergleichen mehr eingerichtet sein kann. Die Steuerungsvorrichtung 15 reagiert dabei vorzugsweise auf Sensorsignale, die von unterschiedlichen Sensoren erfasst werden können.

Eine Sensoreinrichtung 16 ist an dem Boden 7 der Haushalts-Geschirrspülmaschine 1 angeordnet. Dies ist nur beispielhaft zu verstehen, andere Position sind ebenfalls möglich, solange die Sensoreinrichtung 16 im Betrieb der Haushalts-Geschirrspülmaschine 1 mit Spülflotte 18 in Kontakt kommt. Ein bevorzugtes Beispiel hierzu ist ein Pumpentopf einer Umwälzpumpe der Haushalts-Geschirrspülmaschine 1. Die Sensoreinrichtung 16 ist zum Erfassen eines Parameterwerts eines Parameters der Spülflotte 18 eingerichtet. Es handelt sich bei dem Parameter beispielsweise um eine Trübung, einen Leitwert oder auch eine Schmutzfracht. Im Auslieferungszustand der Haushalts-Geschirrspülmaschine 1 umfasst die Sensoreinrichtung 16 eine Schicht 17 (siehe Fig. 2 - 5). Die Schicht 17 weist eine durch die Sensoreinrichtung 16 erfassbare Eigenschaft auf, die sich in Abhängigkeit eines Inhaltsstoffs der Spülflotte 18 einstellt. Der Inhaltsstoff ist insbesondere eine lonenkonzentration, wie Calciumionen, Magnesiumionen, Chlorionen und dergleichen mehr. Speziell Calciumionen und Magnesiumionen sind Härtebildner, die die Wasserhärte bestimmen. Die Wasserhärte hat einen hohen Einfluss auf das Behandlungsergebnis, weshalb diese vorteilhaft bekannt ist. Bei einem ersten Zuführen von Spülflotte 18 in den Behandlungsraum 4, vorzugsweise von unbehandeltem Leitungswasser, stellt sich Eigenschaft der Schicht 17 in Abhängigkeit des Inhaltsstoffs ein. Die Eigenschaft kann mit der Sensoreinrichtung 16 erfasst werden, und die Steuerungsvorrichtung 15 kann auf dieser Basis den Inhaltsstoff ermitteln. Anschließend kann die Schicht 17 abgelöst oder aufgelöst werden, so dass mit der Sensoreinrichtung 16 der Parameterwert erfasst werden kann. In den Fig. 2 - 5 wird detailliert auf die Sensoreinrichtung 16 eingegangen.

Fig. 2 zeigt zwei schematische Abbildungen eines ersten Ausführungsbeispiels einer Sensoreinrichtung 16. Die Sensoreinrichtung 16 kann beispielsweise in der Haushalts-Geschirrspülmaschine 1 der Fig. 1 verwendet werden. Abbildung (A) zeigt die Sensoreinrichtung 16 mit der Schicht 17, Abbildung (B) zeigt die Sensoreinrichtung 16 nach dem Ablösen oder Auflösen der Schicht 17.

In dem Beispiel der Fig. 2 ist die Sensoreinrichtung 16 als eine optische Messeinrichtung mit einer Strahlungsquelle 21 und einem Strahlungsdetektor 22 ausgebildet. Die Messstrecke verläuft durch die Spülflotte 18, sofern in dem Behandlungsraum 4 der Haushalts-Geschirrspülmaschine 1 Spülflotte 18 vorhanden ist. Die Strahlungsquelle 21 ist zum Abstrahlen von Strahlung 23 in Richtung auf den Strahlungsdetektor 22 eingerichtet. Auf dem Strahlungsdetektor 22 ist, wie in der Abbildung (A) zu sehen, die Schicht 17 in der Form einer Beschichtung angeordnet. Solange die Schicht 17 vorhanden ist, muss Strahlung 23, bevor sie von dem Strahlungsdetektor 22 erfasst wird, die Schicht 17 durchlaufen.

In diesem Beispiel weist die Schicht 17 eine optisch aktive Komponente auf, das heißt, dass die Strahlung 23 beim Durchlaufen der Schicht 17 verändert wird. Es sei angemerkt, dass hierunter auch das Absorbieren und das Erzeugen von Strahlung verstanden wird. Die optische Aktivität der Schicht 17 hängt insbesondere von einem Inhaltsstoff der Spülflotte 18 ab. Das heißt, dass je nach dem, wie hoch beispielsweise eine Konzentration des Inhaltsstoffs ist, die optische Aktivität stärker oder geringer ausfällt. Es kann somit zunächst der Inhaltsstoff der Spülflotte 18 ermittelt werden, solange die Schicht 17 vorhanden ist.

Nachdem der Inhaltsstoff ermittelt wurde, kann die Schicht 17 abgelöst oder aufgelöst werden. Dies erfolgt vorzugsweise, indem eine Temperatur der Spülflotte 18 erhöht wird und/oder indem der Spülflotte 18 Reinigungsmittel zugesetzt wird. Das Auflösen oder Ablösen der Schicht 17 ist irreversibel.

Wie in der Abb. (B) dargestellt, kann nach dem Auflösen der Schicht 17 die Sensoreinrichtung 16 wie vorgesehen zum Ermitteln des Parameters der Spülflotte 18 verwendet werden. Das Ablösen oder Auflösen der Schicht 17 kann in diesem Beispiel insbesondere durch längere Einstrahlung der Strahlung 23 erfolgen oder unterstützt werden.

Beispielsweise wird mit der Schicht 17 einmalig, bei Inbetriebnahme des wasserführenden Haushaltsgeräts 1, die Wasserhärte des als Spülflotte 18 zugeführten Leitungswassers bestimmt. Die Wasserhärte von Leitungswasser verändert sich normalerweise nicht oder nur sehr langsam, so dass davon ausgegangen werden kann, dass während der Nutzungsdauer des wasserführenden Haushaltsgeräts 1 der bestimmte Wert gleich bleibt. Bei der weiteren Nutzung wird mit der Sensoreinrichtung 16 während der Durchführung von Behandlungsprogrammen beispielsweise eine Trübung der Spülflotte 18 erfasst, um beispielsweise einen Austausch der Spülflotte 18 und/oder die Dosierung von Reinigungsmittel zu steuern.

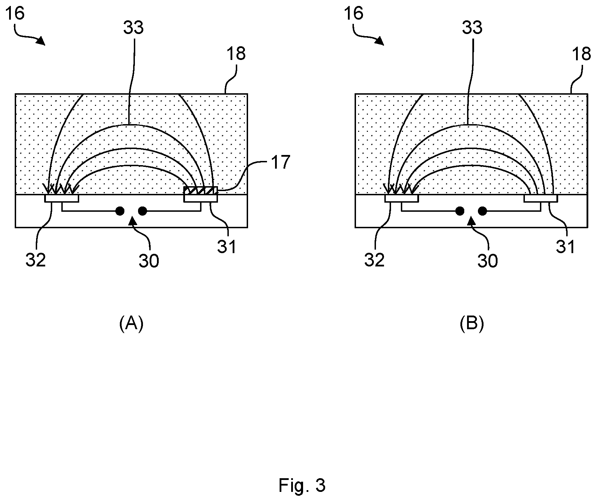

Fig. 3 zeigt zwei schematische Abbildungen eines zweiten Ausführungsbeispiels einer Sensoreinrichtung 16. Die Sensoreinrichtung 16 kann beispielsweise in der Haushalts-Geschirrspülmaschine 1 der Fig. 1 verwendet werden. Abbildung (A) zeigt die Sensoreinrichtung 16 mit der Schicht 17, Abbildung (B) zeigt die Sensoreinrichtung 16 nach dem Ablösen oder Auflösen der Schicht 17.

In dem Beispiel der Fig. 3 umfasst die Sensoreinrichtung 16 eine elektrische Messeinrichtung mit zwei Elektroden 31, 32, an die mittels der Spannungsquelle 30 eine Spannung angelegt werden kann. Die Spannung bewirkt das Ausbilden eines elektrischen Feldes 33, das sich zwischen den Elektroden 31, 32 aufbaut. Mit dieser Anordnung kann beispielsweise ein Leitwert der Spülflotte 18 ermittelt werden. Die Anordnung eignet sich auch zur Durchführung von Impedanzspektroskopie, womit auf verschiedene Bestandteile der Spülflotte 18 geschlossen werden kann. Es sei angemerkt, dass die elektrische Messeinrichtung alternativ zu der Darstellung in der Fig. 3 auch mehr als zwei Elektroden 31, 32, insbesondere eine Referenzelektrode (nicht gezeigt) aufweisen kann. Weiterhin kann eine relative Anordnung der Elektroden 31, 32 unterschiedlich zu der dargestellten sein, beispielsweise gegenüberliegend und dergleichen.

In diesem Beispiel ist die Schicht 17 auf der rechten Elektrode 31 angeordnet. Es sei angemerkt, dass in Ausführungsformen die Schicht 17 auch auf der linken Elektrode 32 angeordnet sein kann und/oder beide Elektroden 31, 32 bedecken kann. Das elektrische Feld 33 verläuft durch die Schicht 17, weshalb mittels des elektrischen Feldes 33 Eigenschaften der Schicht 17 erfasst werden können. Die Schicht 17 kann chemisch derart ausgebildet sein, dass diese beispielsweise in Abhängigkeit eines Chlorgehalts der Spülflotte einen bestimmten Quellgrad einnimmt, das heißt die Schicht 17 weist eine in Abhängigkeit eines Inhaltsstoffs der Spülflotte veränderliche Eigenschaft auf. Der Quellgrad kann beispielsweise auf Basis von Elektrophorese (durch ein elektrisches Feld induzierter Ionentransport) ermittelt werden, und von dem Quellgrad kann auf den Chlorgehalt geschlossen werden.

Das Ablösen oder Auflösen der Schicht 17 kann in diesem Beispiel durch wechselseitiges Anlegen einer hohen Spannung, die beispielsweise im kV-Bereich liegt, unterstützt werden.

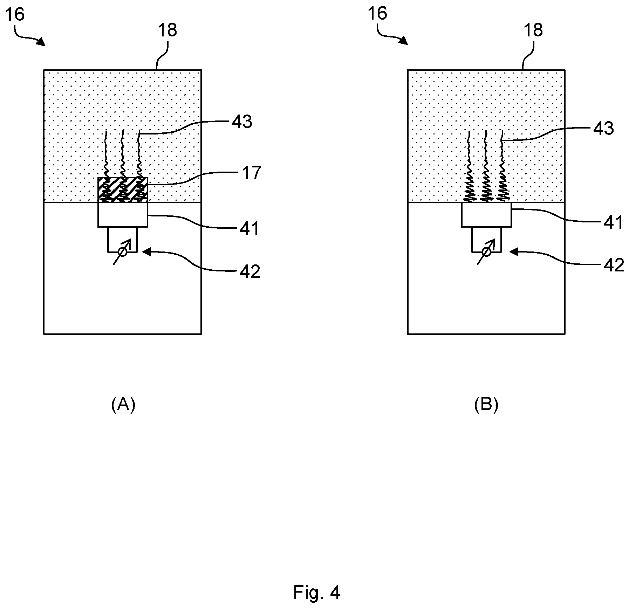

Fig. 4 zeigt zwei schematische Abbildungen dritten Ausführungsbeispiels einer Sensoreinrichtung 16. Die Sensoreinrichtung 16 kann beispielsweise in der Haushalts-Geschirrspülmaschine 1 der Fig. 1 verwendet werden. Abbildung (A) zeigt die Sensoreinrichtung 16 mit der Schicht 17, Abbildung (B) zeigt die Sensoreinrichtung 16 nach dem Ablösen oder Auflösen der Schicht 17.

In diesem Beispiel weist die Sensoreinrichtung 16 einen elektrostriktiven Wandler 41 auf, der von einem Erreger- /Messkreis 42 betrieben wird. Der Wandler 41 ist zum Erzeugen von mechanischen Schwingungen 43 eingerichtet. Je nach Frequenz der Schwingung kann es sich dabei um Ultraschall handeln. Die Sensoreinrichtung 16 kann insbesondere auch als eine Quarzkristall-Mikrowaage (QCM: quartz-crystal-microbalance) ausgebildet sein.

Vorzugsweise wird eine Resonanzfrequenz eines Quarzkristalls, die von dem Medium oberhalb des Wandlers 41 abhängt, gemessen. Von der Resonanzfrequenz kann auf Eigenschaften des Medium, wie einer Viskosität, einer Schmutzfracht und dergleichen geschlossen werden.

Gemäß diesem Prinzip kann mit der auf dem Wandler 41 angeordneten Schicht 17 (Fig. 4 (A)) eine Eigenschaft der Schicht 17, die sich in Abhängigkeit eines Inhaltsstoffs der Spülflotte 18 einstellt, erfasst werden und damit auf den Inhaltsstoff geschlossen werden. Im späteren Betrieb ohne die Schicht 17 (Fig. 4 (B)) kann beispielsweise eine Schmutzfracht in der Spülflotte 18, beispielsweise eine Menge von abgelöstem Schmutz, der sich nicht in der Spülflotte 18 auflöst, und/oder eine Viskosität der Spülflotte 18, die von der Zusammensetzung der Spülflotte 18 in bestimmter Weise abhängt, als der Parameter der Spülflotte 18 ermittelt werden.

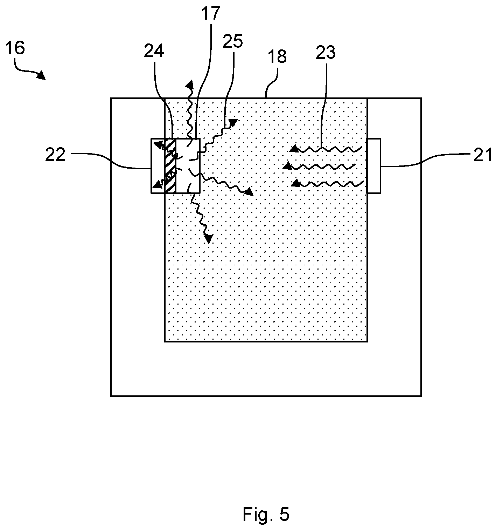

Fig. 5 zeigt eine schematische Abbildung eines weiteren Ausführungsbeispiels einer Sensoreinrichtung 16. Die Sensoreinrichtung 16 kann beispielsweise in der Haushalts-Geschirrspülmaschine 1 der Fig. 1 verwendet werden. Das Beispiel der Fig. 5 zeigt eine spezifische Ausführungsform einer optischen Messeinrichtung, wie anhand der Fig. 2 erläutert. In der Fig. 5 ist nur der Zustand mit der Schicht 17 dargestellt.

Der Aufbau der optischen Messeinrichtung entspricht dem anhand der Fig. 2 erläuterten. Im Unterschied zu dem Beispiel der Fig. 2 ist vorliegend allerdings ein zusätzliches optische Filterelement 24 auf, das zwischen der Schicht 17 und dem Strahlungsdetektor 22 angeordnet ist. Damit filtert des optische Filterelement 24 jegliche auf den Strahlungsdetektor 22 einfallende Strahlung. Die Schicht 17 weist in diesem Beispiel eine fluoreszierende Spezies auf, die, wenn sie durch Strahlung 23 angeregt wird, Fluoreszenzstrahlung 25 abstrahlt. Das optische Filterelement 24 ist derart ausgebildet, dass es die Fluoreszenzstrahlung 25 passieren lässt, Strahlung anderer Wellenlänge aber absorbiert und/oder reflektiert. Damit ist sichergestellt, dass ein von dem Strahlungsdetektor 22 erfasstes Signal von der fluoreszierenden Spezies der Schicht 17 kommt. Das optische Filterelement 24 kann, wie auch die Schicht 17, abgelöst und/oder aufgelöst werden, so dass im späteren Betrieb das volle Spektrum der Strahlungsquelle 21 detektierbar ist.

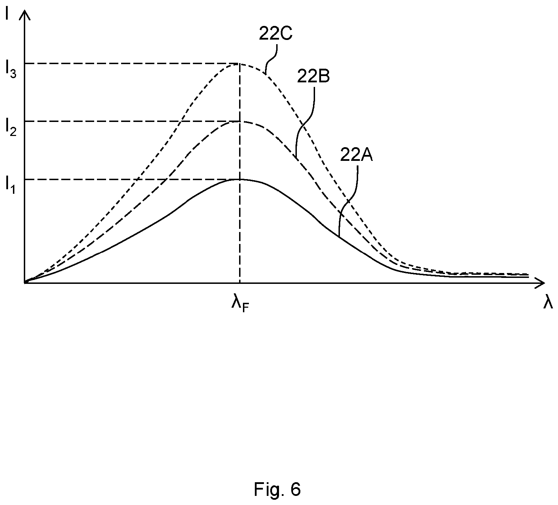

Die Fig. 6 zeigt ein beispielhaftes Diagramm einer Fluoreszenz der Schicht 17 der Fig. 5. In der Fig. 6 sind drei beispielhafte spektrale Messkurven 22A, 22B, 22C für die Schicht 17 gezeigt, wobei die abgestrahlte Intensität I als Funktion der Wellenlänge λ des abgestrahlten Fluoreszenzlichts 25 aufgetragen ist. Die drei Messkurven 22A, 22B, 22C wurden dabei mit der Schicht 17 in Kontakt mit einer Spülflotte 18 mit unterschiedlichen Konzentrationen von Calcium- und Magnesiumionen aufgenommen. Messkurve 22A entspricht dabei einer geringen Ionenkonzentration, Messkurve 22B entspricht einer mittleren Ionenkonzentration und Messkurve 22C entspricht einer hohen Ionenkonzentration. Die Fluoreszenz weist bei der Wellenlänge λF ein Maximum auf, weshalb das Filterelement 24 beispielsweise ausgebildet ist, einen Bereich umfassend diese Wellenlänge durchzulassen. In der Fig. 6 ist erkennbar, wie die Fluoreszenz mit zunehmender Ionenkonzentration stärker wird. Von der Intensität im Intensitätsmaximum I1, I2, I3 der jeweiligen Messkurve 22A, 22B, 22C kann somit auf die Ionenkonzentration und damit auf die Wasserhärte geschlossen werden. Nachdem die Wasserhärte in dieser Weise bestimmt wurde, kann die Schicht 17 und das optische Filterelement 24 abgelöst oder aufgelöst werden, und die optische Messeinrichtung kann zum Erfassen einer Trübung der Spülflotte 18 oder dergleichen verwendet werden.

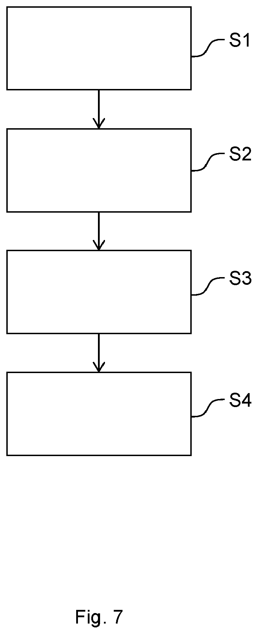

Fig. 7 zeigt ein schematisches Blockschaltbild eines beispielhaften Verfahrens zum Betreiben eines wasserführenden Haushaltsgeräts 1, beispielsweise der Haushalts-Geschirrspülmaschine der Fig. 1. In einem ersten Schritt S1 wird eine in Abhängigkeit eines Inhaltsstoffs einer Spülflotte 18 (siehe Fig. 2 - 5) veränderliche Eigenschaft einer Schicht 17 (siehe Fig. 2 - 5) einer Sensoreinrichtung 16 (siehe Fig. 1 - 5), die mit der Spülflotte 18 (siehe Fig. 2 - 5) des Haushaltsgeräts 1 in Kontakt ist, erfasst. Die Spülflotte 18 ist in diesem Schritt insbesondere unbehandeltes, dem Haushaltsgerät 1 zugeführtes Leitungswasser. In einem zweiten Schritt S2 wird ein Inhaltsstoff der Spülflotte 18 in Abhängigkeit der erfassten Eigenschaft der Schicht 17 ermittelt. Vorzugsweise wird eine Wasserhärte oder eine andere Ionenkonzentration der Spülflotte ermittelt. In einem dritten Schritt S3 wird die Schicht 17 abgelöst und/oder aufgelöst. In einem vierten Schritt S4 wird ein Parameterwert eines Parameters der Spülflotte 18 mittels der Sensoreinrichtung 16 erfasst. Vorzugsweise wird eine Trübung, eine Reinigungsmittelkonzentration und/oder eine Schmutzfracht in der Spülflotte 18 erfasst.

Obwohl die vorliegende Erfindung anhand von Ausführungsbeispielen beschrieben wurde, ist sie vielfältig modifizierbar.

### Verwendete Bezugszeichen:

- 1: Geschirrspülmaschine
- 2: Spülbehälter
- 3: Tür
- 4: Behandlungsraum
- 5: Schwenkachse
- 6: Beschickungsöffnung
- 7: Boden
- 8: Decke
- 9: Rückwand
- 10: Seitenwand
- 11: Seitenwand
- 12: Spülgutaufnahme
- 13: Spülgutaufnahme
- 14: Spülgutaufnahme
- 15: Steuerungsvorrichtung
- 16: Sensoreinrichtung
- 17: Beschichtung
- 18: Spülflotte
- 21: Strahlungsquelle
- 22: Strahlungsdetektor
- 22A: Fluoreszenzsignal
- 22B: Fluoreszenzsignal
- 22C: Fluoreszenzsignal
- 23: Strahlung
- 24: optisches Filterelement
- 25: Fluoreszenzstrahlung
- 30: Spannungsquelle
- 31: Elektrode
- 32: Elektrode
- 33: Feldlinien
- 41: Schwingquarz
- 42: Erreger-/Messkreis
- 43: mechanische Schwingung

- A: Ausziehrichtung
- E: Einschubrichtung
- I: Intensität
- I1: Intensität
- I2: Intensität
- I3: Intensität
- λ: Wellenlänge
- λF: Wellenlänge
- S1: Verfahrensschritt
- S2: Verfahrensschritt
- S3: Verfahrensschritt
- S4: Verfahrensschritt

## Patentansprüche

1. Wasserführendes Haushaltsgerät (1), insbesondere Geschirrspülmaschine, mit einer Steuerungsvorrichtung (15) zum Durchführen eines Behandlungsprogramms aus einer Anzahl von Behandlungsprogrammen zum Behandeln von in einem Behandlungsraum (4) des Haushaltsgeräts (1) anordenbarem Behandlungsgut mit einer Spülflotte (18), mit einer Sensoreinrichtung (16) zum Erfassen eines Parameterwerts wenigstens eines Parameters der Spülflotte (18) während der Durchführung des Behandlungsprogramms, wobei die Sensoreinrichtung (16) eine Messstrecke (23, 33, 43) aufweist, die zumindest abschnittsweise durch die Spülflotte (18) verläuft, wobei die Sensoreinrichtung (16) eine durch eine physikalische und/oder chemische Einwirkung ab- und/oder auflösbare Schicht (17) aufweist, die während der Durchführung des Behandlungsprogramms einen Kontakt mit der Spülflotte (18) aufweist und die eine in Abhängigkeit eines Inhaltsstoffs der Spülflotte (18) veränderliche Eigenschaft aufweist, wobei die Sensoreinrichtung (16) zum Erfassen der Eigenschaft der Schicht (17) eingerichtet ist, wobei die Steuerungsvorrichtung (15) zum Ermitteln eines Messwerts des Inhaltsstoffs der Spülflotte (18) in Abhängigkeit der erfassten Eigenschaft eingerichtet ist, wobei der Inhaltsstoff der Spülflotte (18) eine Ionenkonzentration, insbesondere von Calciumionen und/oder Magnesiumionen, umfasst, wobei die Spülflotte (18) bei dem Erfassen der veränderlichen Eigenschaft der Schicht (17) dem Haushaltsgerät (1) zugeführtes Leitungswasser ist, und wobei die Steuerungsvorrichtung (15) dazu eingerichtet ist, eine Wasserhärte von dem Haushaltsgerät (1) als Spülflotte (18) zugeführtem Leitungswasser zu ermitteln und eine dem Haushaltsgerät (1) zugeordnete Enthärtungseinrichtung in Abhängigkeit der ermittelten Wasserhärte einzustellen.

2. Wasserführendes Haushaltsgerät nach Anspruch 1, **dadurch gekennzeichnet, dass** die Steuerungsvorrichtung (15) dazu eingerichtet ist, das Behandlungsprogramm in Abhängigkeit des ermittelten Inhaltsstoffs durchzuführen.

3. Wasserführendes Haushaltsgerät nach Anspruch 1 oder 2, **dadurch gekennzeichnet, dass** die Sensoreinrichtung (16) eine optische Messeinrichtung aufweisend eine Strahlungsquelle (21) und einen Strahlungsdetektor (22) umfasst, wobei die Strahlung (23) im Betrieb durch die Schicht (17) verläuft und die Schicht (17) eine veränderliche optische Eigenschaft aufweist.

4. Wasserführendes Haushaltsgerät nach Anspruch 3, **dadurch gekennzeichnet, dass** die Schicht (17) eine in Abhängigkeit einer Konzentration des Inhaltsstoffs der Spülflotte (18) veränderliche Fluoreszenz aufweist.

5. Wasserführendes Haushaltsgerät nach Anspruch 4, **dadurch gekennzeichnet, dass** ein optisches Filterelement (24) zwischen der Schicht (17) und dem Strahlungsdetektor (22) angeordnet ist, das nur für das von der Schicht (17) abgestrahlte Fluoreszenzlicht (25) durchlässig ist, wobei das optische Filterelement (24) durch eine physikalische und/oder chemische Einwirkung auflösbar ist.

6. Wasserführendes Haushaltsgerät nach einem der Ansprüche 1 - 5, **dadurch gekennzeichnet, dass** die Sensoreinrichtung (16) eine elektrische Messeinrichtung aufweisend wenigstens zwei Elektroden (31, 32) umfasst, wobei ein durch eine an die Elektroden (31, 32) angelegte Spannung erzeugtes elektrisches Feld (33) zumindest teilweise durch die Schicht (17) verläuft.

7. Wasserführendes Haushaltsgerät nach einem der Ansprüche 1 - 6, **dadurch gekennzeichnet, dass** die Sensoreinrichtung (16) einen elektrostriktiven und/oder magnetostriktiven Wandler (41) umfasst, der zum Erzeugen einer mechanischen Schwingung (43) eingerichtet ist, wobei die erzeugte mechanische Schwingung (43) in die Schicht (17) einkoppelt.

8. Wasserführendes Haushaltsgerät nach einem der Ansprüche 1 - 7, **dadurch gekennzeichnet, dass** der Parameter der Spülflotte (18) eine Trübung, eine Reinigerkonzentration, eine Schmutzfracht der Spülflotte (18) umfasst, wobei die Steuerungsvorrichtung (15) zum Durchführen des Behandlungsprogramms in Abhängigkeit des erfassten Parameterwerts eingerichtet ist.

9. Wasserführendes Haushaltsgerät nach einem der Ansprüche 1 - 8, **dadurch gekennzeichnet, dass** die Steuerungsvorrichtung (15) dazu eingerichtet ist, ein Behandlungsprogramm derart durchzuführen, dass die Schicht (17) ab- und/oder aufgelöst wird.

10. Wasserführendes Haushaltsgerät nach einem der Ansprüche 1 - 9, **dadurch gekennzeichnet, dass** die Steuerungsvorrichtung (15) zum Erfassen eines ersten Kalibrierungsmesswerts der Sensoreinrichtung (16) vor der ersten Durchführung eines Behandlungsprogramms und/oder zum Erfassen eines zweiten Kalibrierungsmesswerts der Sensoreinrichtung (16) nach dem Erfassen der Eigenschaft der Schicht (17) eingerichtet ist, und zum Ermitteln des Messwerts des Inhaltsstoffs der Spülflotte (18) in Abhängigkeit des ersten Kalibrierungsmesswerts und/oder des zweiten Kalibrierungsmesswerts eingerichtet ist.

11. Verfahren zum Betreiben eines wasserführenden Haushaltsgeräts (1), insbesondere einer Geschirrspülmaschine, mit:
Erfassen (S1) einer in Abhängigkeit eines Inhaltsstoffs einer Spülflotte (18) des Haushaltsgeräts veränderlichen Eigenschaft einer Schicht (17) einer Sensoreinrichtung (16), die mit der Spülflotte (18) des Haushaltsgeräts (1) in Kontakt ist,
Ermitteln (S2) eines Inhaltsstoffs der Spülflotte (18) in Abhängigkeit der erfassten Eigenschaft,
Ablösen und/oder Auflösen (S3) der Schicht (17), und
Erfassen (S4) eines Parameterwerts eines Parameters der Spülflotte (18) mittels der Sensoreinrichtung (16),
wobei der Inhaltsstoff der Spülflotte (18) eine Ionenkonzentration, insbesondere von Calciumionen und/oder Magnesiumionen, umfasst, wobei die Spülflotte (18) bei dem Erfassen der veränderlichen Eigenschaft der Schicht (17) dem Haushaltsgerät (1) zugeführtes Leitungswasser ist, und wobei eine Steuerungsvorrichtung (15) dazu eingerichtet ist, eine Wasserhärte von dem Haushaltsgerät (1) als Spülflotte (18) zugeführtem Leitungswasser zu ermitteln und eine dem Haushaltsgerät (1) zugeordnete Enthärtungseinrichtung in Abhängigkeit der ermittelten Wasserhärte einzustellen.

## Claims

1. Water-conducting household appliance (1), in particular dishwasher, with a control apparatus (15) for carrying out one treatment program from a number of treatment programs for treating an object to be treated, which can be arranged in a treatment compartment (4) of the household appliance (1), with a washing liquor (18), with a sensor facility (16) for detecting a parameter value of at least one parameter of the washing liquor (18) while the treatment program is being carried out, wherein the sensor facility (16) has a measuring section (23, 33, 43) which runs through the washing liquor (18) at least in sections, wherein the sensor facility (16) has a layer (17) that can be removed and/or dissolved by a physical and/or chemical reaction, which layer has a contact with the washing liquor (18) while the treatment program is being carried out and which has a property which can change as a function of a constituent of the washing liquor (18), wherein the sensor facility (16) is designed to detect the property of the layer (17), wherein the control apparatus (15) is designed to determine a measured value of the constituent of the washing liquor (18) as a function of the detected property, wherein the constituent of the washing liquor (18) comprises a concentration of ions, in particular calcium ions and/or magnesium ions, wherein the washing liquor (18) is tap water fed to the household appliance (1) when the changeable property of the layer (17) is detected, and wherein the control apparatus (15) is designed to determine a water hardness of tap water fed to the household appliance (1) as washing liquor (18) and to adjust a softening facilty assigned to the household appliance (1) as a function of the determined water hardness.

2. Water-conducting household appliance according to claim 1, **characterised in that** the control apparatus (15) is designed to carry out the treatment program as a function of the determined constituent.

3. Water-conducting household appliance according to claim 1 or 2, **characterised in that** the sensor facility (16) comprises an optical measuring facility having a radiation source (21) and a radiation detector (22), wherein during operation the radiation (23) runs through the layer (17) and the layer (17) has a changeable optical property.

4. Water-conducting household appliance according to claim 3, **characterised in that** the layer (17) has a fluorescence which can change as a function of a concentration of the constituent of the washing liquor (18).

5. Water-conducting household appliance according to claim 4, **characterised in that** an optical filter element (24) is arranged between the layer (17) and the radiation detector (22), which filter element is only permeable to the fluorescent light (25) radiated by the layer (17), wherein the optical filter element (24) can be dissolved by a physical and/or chemical reaction.

6. Water-conducting household appliance according to one of claims 1 - 5, **characterised in that** the sensor facility (16) comprises an electrical measuring facility having at least two electrodes (31, 32), wherein an electrical field (33) generated by a voltage applied to the electrodes (31, 32) runs at least partially through the layer (17).

7. Water-conducting household appliance according to one of claims 1 - 6, **characterised in that** the sensor facilty (16) comprises an electrostrictive and/or magnetostrictive converter (41), which is designed to generate a mechanical vibration (43), wherein the generated mechanical vibration (43) couples into the layer (17).

8. Water-conducting household appliance according to one of claims 1 - 7, **characterised in that** the parameter of the washing liquor (18) comprises a turbidity, a detergent concentration, a dirt load of the washing liquor (18), wherein the control apparatus (15) is designed to carry out the treatment program as a function of the detected parameter value.

9. Water-conducting household appliance according to one of claims 1 - 8, **characterised in that** the control apparatus (15) is designed to carry out a treatment program such that the layer (17) is removed and/or dissolved.

10. Water-conducting household appliance according to one of claims 1 - 9, **characterised in that** the control apparatus (15) is designed to detect a first calibration measured value of the sensor facility (16) before a treatment program is carried out for the first time and/or to detect a second calibration measured value of the sensor facility (16) after detecting the property of the layer (17), and is designed to determine the measured value of the constituent of the washing liquor (18) as a function of the first calibration measured value and/or the second calibration measured value.

11. Method for operating a water-conducting household appliance (1), in particular a dishwasher, with:
Detecting (S1) a property, which can change as a function of a constituent of a washing liquor (18) of the household appliance, of a layer (17) of a sensor facility (16), which is in contact with the washing liquor (18) of the household appliance (1),
Determining (S2) a constituent of the washing liquor (18) as a function of the detected property,
Removing and/or dissolving (S3) the layer (17), and
Detecting (S4) a parameter value of a parameter of the washing liquor (18) by means of the sensor facility (16),
wherein the constituent of the washing liquor (18) comprises a concentration of ions, in particular calcium ions and/or magnesium ions, wherein the washing liquor (18) is tap water fed to the household appliance (1) when the changeable property of the layer (17) is detected, and wherein a control apparatus (15) is designed to determine a water hardness of tap water fed to the household appliance (1) as washing liquor (18) and to adjust a softening facility assigned to the household appliance (1) as a function of the determined water hardness.

## Revendications

1. Appareil électroménager à circulation d'eau (1), en particulier un lave-vaisselle, comprenant : un dispositif de commande (15) destiné à exécuter un programme de traitement parmi une pluralité de programmes de traitement pour traiter des articles à traiter pouvant être disposés dans une enceinte de traitement (4) de l'appareil électroménager (1) avec une eau de lavage (18), et un dispositif de détection (16) destiné à acquérir une valeur d'au moins un paramètre de l'eau de lavage (18) pendant l'exécution du programme de traitement, dans lequel le dispositif de détection (16) comprend une section de mesure (23, 33, 43) qui s'étend au moins partiellement à travers l'eau de lavage (18), dans lequel le dispositif de détection (16) comprend une couche apte à être désintégrée et/ou dissoute (17) sous l'effet d'une action physique et/ou chimique, qui est en contact avec l'eau de lavage (18) durant l'exécution du programme de traitement et qui présente une propriété variable en fonction d'un constituant de l'eau de lavage (18), dans lequel le dispositif de détection (16) est configuré pour acquérir la propriété de la couche (17), dans lequel le dispositif de commande (15) est configuré pour déterminer une valeur de mesure du constituant de l'eau de lavage (18) en fonction de la propriété acquise, le constituant de l'eau de lavage (18) comprenant une concentration ionique, en particulier une concentration d'ions calcium et/ou d'ions magnésium, dans lequel l'eau de lavage (18) est de l'eau de distribution fournie à l'appareil électroménager (1) lors de l'acquisition de la propriété variable de la couche (17), et dans lequel le dispositif de commande (15) est configuré pour déterminer une dureté de l'eau de distribution fournie à l'appareil électroménager (1) à titre d'eau de lavage (18) et pour régler un dispositif de détartrage associé à l'appareil électroménager (1) en fonction de la dureté de l'eau déterminée.

2. Appareil électroménager à circulation d'eau selon la revendication 1, **caractérisé en ce que** le dispositif de commande (15) est configuré pour exécuter le programme de traitement en fonction du constituant déterminé.

3. Appareil électroménager à circulation d'eau selon la revendication 1 ou 2, **caractérisé en ce que** le dispositif de détection (16) comprend un moyen de mesure optique comprenant une source de rayonnement (21) et un détecteur de rayonnement (22), dans lequel le rayonnement (23) passe à travers la couche (17) durant le fonctionnement et la couche (17) présente une propriété optique variable.

4. Appareil électroménager à circulation d'eau selon la revendication 3, **caractérisé en ce que** la couche (17) présente une fluorescence variable en fonction d'une concentration du constituant de l'eau de lavage (18).

5. Appareil électroménager à circulation d'eau selon la revendication 4, **caractérisé en ce qu'**un élément de filtre optique (24) est disposé entre la couche (17) et le détecteur de rayonnement (22), lequel laisse passer uniquement la lumière fluorescente (25) émise par la couche (17), dans lequel l'élément de filtre optique (24) est apte à être dissous ou désagrégé sous l'effet d'une action physique et/ou chimique.

6. Appareil électroménager à circulation d'eau selon l'une des revendications 1 à 5, **caractérisé en ce que** le dispositif de détection (16) comprend un dispositif de mesure électrique comprenant au moins deux électrodes (31, 32), dans lequel un champ électrique (33) généré par une tension appliquée aux électrodes (31, 32) est établi au moins en partie à travers la couche (17).

7. Appareil électroménager à circulation d'eau selon l'une des revendications 1 à 6, **caractérisé en ce que** le dispositif de détection (16) comprend un transducteur électrostrictif et/ou magnétostrictif (41), qui est configuré pour générer une vibration mécanique (43), la vibration mécanique générée (43) étant injectée dans la couche (17).

8. Appareil électroménager à circulation d'eau selon l'une des revendications 1 à 7, **caractérisé en ce que** le paramètre de l'eau de lavage (18) comprend une turbidité, une concentration de détergent, un niveau de contamination de l'eau de lavage (18), dans lequel le dispositif de commande (15) est configuré pour exécuter le programme de lavage en fonction de la valeur du paramètre acquise.

9. Appareil électroménager à circulation d'eau selon l'une des revendications 1 à 8, **caractérisé en ce que** le dispositif de commande (15) est configuré pour exécuter un programme de lavage de sorte que la couche (17) soit désintégrée et/ou dissoute.

10. Appareil électroménager à circulation d'eau selon l'une des revendications 1 à 9, **caractérisé en ce que** le dispositif de commande (15) est configuré pour acquérir une première valeur de mesure d'étalonnage du dispositif de détection (16) avant la première exécution d'un programme de traitement et/ou pour acquérir une deuxième valeur de mesure d'étalonnage du dispositif de détection (16) après l'acquisition de la propriété de la couche (17), et pour déterminer la valeur de mesure du constituant de l'eau de lavage (18) en fonction de la première valeur de mesure d'étalonnage et/ou de la deuxième valeur de mesure d'étalonnage.

11. Procédé de fonctionnement d'un appareil électroménager à circulation d'eau (1), en particulier d'un lave-vaisselle, comprenant :
l'acquisition (S1) d'une propriété variable d'une couche (17) d'un dispositif de détection (16) en contact avec une eau de lavage (18) de l'appareil électroménager (1) en fonction d'un constituant de l'eau de lavage (18) de l'appareil électroménager,
la détermination (S2) d'un constituant de l'eau de lavage (18) en fonction de la propriété acquise,
la désintégration et/ou dissolution (S3) de la couche (17), et
l'acquisition (S4) d'une valeur d'un paramètre de l'eau de lavage (18) au moyen du dispositif de détection (16),
dans lequel le constituant de l'eau de lavage (18) comprend une concentration ionique, en particulier d'ions calcium et/ou d'ions magnésium,
dans lequel l'eau de lavage (18) est de l'eau de distribution fournie à l'appareil électroménager (1) lors de l'acquisition de la propriété variable de la couche (17), et dans lequel le dispositif de commande (15) est configuré pour déterminer la dureté de l'eau de distribution fournie à l'appareil électroménager (1) à titre d'eau de lavage (18) et pour régler un dispositif de détartrage associé à l'appareil électroménager (1) en fonction de la dureté de l'eau déterminée.
